Europäisches Patentamt

European Patent Office

Office européen des brevets

(19)

(11) Publication number: **0 447 029 A1**

## (12) EUROPEAN PATENT APPLICATION

(21) Application number: **91300852.0**

(22) Date of filing: **01.02.91**

(51) Int. Cl.5: **B01D 53/04**

(30) Priority: **09.02.90 GB 9002930**
**08.11.90 GB 9024286**

(43) Date of publication of application:
**18.09.91 Bulletin 91/38**

(84) Designated Contracting States:
**BE DE ES FR GB IT NL**

(71) Applicant: **AIR PRODUCTS AND CHEMICALS, INC.**
**7201 Hamilton Boulevard**
**Allentown, PA 18195-1501(US)**

(72) Inventor: **Young, Philip John**
**Belton Cottage, Wrexham Road**
**Whitchurch, Shropshire SY13 1JG(GB)**
Inventor: **Sarli, Turgay**
**Fazantenlaan 32-3078**
**Kortenberg(BE)**

(74) Representative: **Lucas, Brian Ronald**
**Lucas, George & Co. 135 Westhall Road**
**Warlingham Surrey CR6 9HJ(GB)**

(54) Enhanced primary component output from adsorptive separation.

(57) An adsorption unit comprises a compressor (10), an adsorber (22, 24) and a storage vessel (34). The storage vessel (34) is provided with a pressure sensor (36) which shuts off compressor (10) when the pressure in the storage vessel (34) reaches a predetermined first pressure. The compressor (10) is not reactivated until the pressure in the storage vessel (34) has dropped to a predetermined second pressure which is typically at least 6 bar below the first pressure. Steps are taken to ensure that whenever the compressor (10) is working the purity of gas entering the storage vessel (34) is substantially constant. This may be achieved by, for example regulating a control valve (32) disposed between the adsorber (22, 24) and the storage vessel (34) in response to the purity of the product or the pressure in the storage vessel. Other methods include adjusting the cycle time of the adsorber or adjusting its depressurization time. Overall operating costs may be reduced by operating the adsorption unit at high efficiency whenever the compressor (10) is running.

EP 0 447 029 A1

This invention relates to a method of operating an adsorption unit and an adsorption unit for carrying out this method.

It is becoming increasingly common to use adsorption units to separate gas mixtures on site. Typically, such adsorption units are used to provide oxygen and/or nitrogen from air.

One of the problems with adsorption units is that they can only operate efficiently over a narrow range of production. However, in many applications the demand fluctuates substantially.

It has been proposed in US-A-4 725 293 to draw gas from a storage vessel and recharge the storage vessel in step with the demand by, for example varying the overall adsorption/desorption time and/or regulating the flow into and out of the adsorption unit. This does however, require an extremely sophisticated control mechanism.

An alternative approach described in US-4 323 370 has been to run the adsorption until the storage vessel is full. The adsorption unit is then switched off until the pressure in the storage vessel reaches a predetermined lower level. The adsorption unit is then switched on until the storage vessel is full. The disadvantage with this system is that the purity of the gas entering the storage vessel progressively increases as the storage vessel fills. Since the user normally requires gas at a minimum guaranteed purity most adsorption units are set to provide this purity under worst conditions. As a result the storage vessel often contains product gas at a higher purity than required. The energy needed to provide this extra purity is expensive and unnecessary.

According to the present invention there is provided a method of operating an adsorption unit comprising at least one adsorber and a storage vessel, which method comprises the steps of shutting down or idling said adsorption unit when the pressure of product in said storage vessel reaches a predetermined first pressure and restarting said adsorption unit when said pressure in said storage vessel falls to a predetermined second pressure, characterized in that said storage vessel is charged with gas of substantially constant purity.

Various arrangements may be employed to ensure that the storage vessel is charged with gas of substantially constant purity.

In a first embodiment a control valve is placed between the adsorber and the storage vessel. The control valve can be controlled in several ways.

Firstly, the control valve may be controlled in response to the pressure in the storage vessel to ensure that the flow of gas into the storage vessel is substantially constant (switching operations excepted). This has the advantage that the residence time of the gas in the adsorber is substantially constant. Thus as the storage vessel fills the control valve is opened to compensate for the reduced pressure drop between the adsorber and the storage vessel.

Secondly, the control valve may be controlled in response to the purity of the product, for example in the storage vessel. This is preferred to the first alternative since although the positions of the control valve will be similar in both cases the latter system will automatically compensate for changes in the ambient temperature and deterioration of the adsorbent.

In a second embodiment the cycle time is decreased as the storage vessel is filled. Again this may be controlled in response to the pressure in the storage vessel or the purity of the product.

In a third embodiment, the adsorption unit is a pressure swing adsorption unit and the depressurization time is reduced as the pressure in the storage vessel increases.

The techniques described in the three embodiments above may be used separately or used in any combination as desired.

Preferably, the adsorption unit is arranged so that the adsorber replenishes the storage vessel at the design rate of the adsorption unit for the purity required.

The present invention also provides an apparatus for carrying out a method in accordance with the present invention, which apparatus comprises a compressor, an adsorber, a storage vessel, a pressure sensor for detecting the pressure of product in said storage vessel and operative to inhibit said compressor when said pressure reaches a predetermined first pressure and activate said compressor when said pressure falls to a predetermined second pressure, characterized in that said apparatus further comprises means to maintain the purity of gas entering said storage vessel substantially constant.

Preferably, said means comprise a control valve disposed between said adsorber and said storage vessel.

Advantageously, said means comprises a pressure sensor arranged to detect the pressure in said storage vessel and means responsive to said pressure sensor to control said control valve.

More advantageously, said means comprises a sensor for sensing the purity of said product and means responsive to said sensor to control the control valve.

Alternatively, or in addition, said apparatus includes means to adjust the cycle time of said adsorber.

Preferably, said means comprises a pressure sensor arranged to detect the pressure in said storage vessel and means responsive to said pressure sensor to control the cycle time of said adsorber.

Advantageously, said means comprises a sensor for sensing the purity of said product and means responsive to said sensor to control the cycle time of said adsorber.

Alternatively, or in addition to the foregoing, said apparatus preferably includes means to adjust the depressurization time of said adsorber.

Preferably, said means comprises a pressure sensor arranged to detect the pressure in said storage vessel and means responsive to said pressure sensor to control the depressurization time of said adsorber.

Advantageously, said means comprises a sensor for sensing the purity of said product and means responsive to said sensor to control the depressurization time of said adsorber.

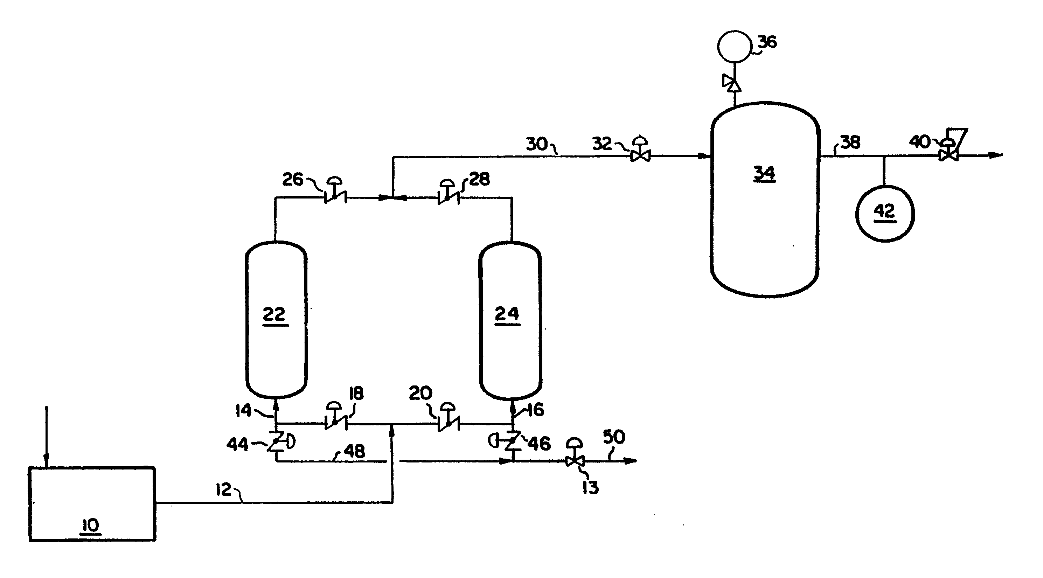

For a better understanding of the present invention reference will now be made, by way of example, to the accompanying drawing which shows a flow sheet of one embodiment of an apparatus in accordance with the present invention.

Referring to the drawing air is passed through a filter (not shown) and compressed in a compressor 10. Moisture is then removed by a refrigeration unit (not shown). The compressed air in line 12 passes through one of two adsorbers 22 or 24 depending upon the opening of valves 18 or 20. For instance, valve 18 may be opened while valve 20 is closed and feed air passes through line 14 into adsorber 22 packed with a carbon molecular sieve adsorbent which preferentially adsorbs oxygen. A nitrogen enriched product passes through valve 26, manifold 30 and flow control valve 32 to a storage vessel 34. The storage vessel 34 acts as a buffer to reduce pressure surges and variations in the pressure is sensed by pressure sensor 36 which is operable to automatically shutdown the compressor 10 at a predetermined maximum pressure, e.g., 6.5 bar A and automatically restart the compressor 10 at a minimum pressure, e.g., 4.5 bar A.

The nitrogen product (primary component) is withdrawn through line 38 and the purity of the nitrogen is sensed by an oxygen analyzer 42.

Nitrogen product is then removed from the adsorption unit through valve 40 for end-use.

When oxygen saturation or some cycle end point occurs in adsorber 22, feed is terminated. For a short interval adsorbers 22 and 24 are allowed to pressure equalize between one another by connecting either their front ends or effluent ends or both. During this period gas flow is entirely from adsorber 22 to 24.

After pressure equalization, adsorber 24 is pressurized by feed air passing through valve 20 and line 16 while valve 28 is closed. When adsorption pressure is reached or approximated, valve 28 opens and the adsorption stage initiates for adsorber 24.

After the pressure equalization, adsorber 22 is desorbed by closing valve 26 and valve 18 and opening vent valve 44 to eject void space gas and oxygen enriched gas (secondary component) into vent line 48 and common manifold 50 for either venting or use of the oxygen enriched gas.

At the end of the adsorption stage in adsorber 24 and the depressurization stage in adsorber 22 a pressure equalization stage is conducted similar to that described above, but in this instance gas flow occurs entirely from adsorber 24 to adsorber 22 through either the respective influent ends, effluent ends or both.

Adsorber 24 is then desorbed by reduced pressure when valves 28 and 20 are closed and valve 46 is opened and oxygen enriched gas and void space gas pass through line 50 to vent or for utilization.

The operation of the PSA system will be understood with greater clarity by review of the valve chart appearing in Table 1 below and the phase sequence of operation of the various states of the beds set forth in Table 2.

## TABLE 1

### VALVE CHART

-------------------------------------

| Valve Number | 18 | 44 | 46 | 20 | 26 | 28 | 32 | 13 |
|---|---|---|---|---|---|---|---|---|
| V22 Adsorbing | | | | | | | | |
| V24 Desorbing | o | x | o | x | o | x | o | o |
| Equalization | x | o | o | x | o | o | x | x |
| V22 Desorbing | | | | | | | | |
| V24 Adsorbing | x | o | x | o | x | o | o | o |
| Equalization | x | o | o | x | o | o | x | x |

-------------------------------------

x = closed

o = open

## TABLE 2

### PHASE DIAGRAM

```
V22| E  | R |   ADSORB.      | E |         DEPRES.           |

V24| E  |     DEPRES.       | E | R |    ADSORB.             |


T  0........................60......................120
```

| V22 | = Vessel 22 |
|---|---|
| V24 | = Vessel 24 |
| T | = Cycle time (s) |
| E | = equalization 0 to 4 bar and 4 to 0 bar |
| R | = repressurization 4 to 8 bar |
| ADSORB. | = adsorption for nitrogen production 8 bar |
| DEPRES. | = depressurization 4 to 0 bar |

In operation, storage vessel 34 is first filled to a predetermined first pressure at which point the compressor 10 is shut down. The compressor then remains inactive until the pressure in the storage vessel has reached a predetermined lower pressure.

When the lower pressure is reached compressor 10 is activated.

During recharging of the storage vessel 34 control valve 32 is controlled so that the purity of gas entering the storage vessel 34 is substantially constant. This may be achieved, for example by keeping the flow rate to the storage vessel 34 substantially constant. Thus, if no product is withdrawn, control valve 34 is progressively opened as the storage vessel 34 is filled. Since the flow rate through control valve 32 is substantially constant the residence time of the gas in the adsorbers is substantially constant with the result that the purity of the gas leaving the adsorber is also substantially uniform.

The flow through control valve 32 may be controlled by several parameters, for example a flow measuring device situated upstream or downstream of the flow control valve 32 or a pressure sensor in or downstream of the storage vessel 34.

A more accurate control is to adjust control valve 32 in response to the signal from oxygen analyzer 42. As the pressure in storage vessel 34 increases the residence time in adsorber 22 increases and the purity of the product increases. Control valve 34 is opened to bring the composition back to that desired. This approach is preferred since variations in production caused by, for example temperature, deterioration of the adsorbent, and even clogging of the air filter (not shown) upstream of compressor 10 are automatically accounted for.

An alternative approach, which does not require the use of control valve 32 (although it may be included), is to adjust the cycle time of the adsorbers (22, 24) with a view to maintaining the composition of gas entering the storage vessel 34 substantially constant. In this case, as the storage vessel 34 is filled the oxygen analyzer 42 detects an increase in purity of the nitrogen caused by increased residence time of the air in the adsorbers. In order to reduce the purity of the product the cycle time is reduced by a compensating amount.

A third approach is to simply adjust the desorption time in accordance with the purity of the product. Again the desorption time should be reduced as the storage vessel approaches the first predetermined pressure. In particular the depressurization duration is shortened to retain nitrogen in the void space of the adsorber and retain at least some oxygen in the adsorbent and in the void space with a resulting increase in production and decrease in the product purity back to design purity. The reverse relationship also exists such that when purity of product gas is below design purity as sensed by the gas analyzer, the depressurization duration can be lengthened to remove more completely the oxygen from the adsorbent in the adsorber and result in production of gas relative to such design purity.

Whilst the preferred embodiment is directed to the separation of air, it should be understood that other gas mixtures and adsorbents may also be used. Suitable adsorbents might include activated carbon, silica gels, mordenites, X-zeolites, A-zeolites and Y-zeolites.

Since adsorption units operate at or near peak efficiency at their design rate the storage vessel is effectively recharged under optimum or near optimum conditions. By allowing the pressure in the storage vessel to fall significantly before the before the adsorption unit is reactivated excessive switching on and off of the adsorption unit is avoided.

Preferably, the pressure should fall at least 1.5 bar, preferably at least 3.5 bar and, advantageously at least 6.5 bar. Typically, the storage vessel will be filled to a maximum pressure of from 10 bar g to 5 bar g, with 7.5 bar g currently being preferred. With this later maximum pressure reactivation is preferably delayed until the pressure falls to 6.0 bar g or lower, more preferably 4 bar g or lower and advantageously to around 1 bar g.

The invention becomes particularly significant when the size of the storage vessel is large. In one trial an old liquid nitrogen storage sphere with a capacity of around 20,000 litres was charged daily from midnight to 6 am. The nitrogen produced was sufficient to supply the daily requirements of the user. Not only was the adsorption unit working at peak efficiency throughout the entire charging period but power was obtained at off-peak tariffs.

## Claims

1. A method of operating an adsorption unit comprising at least one adsorber (22, 24) and a storage vessel (34), which method comprises the steps of shutting down or idling said adsorption unit when the pressure of product in said storage vessel (34) reaches a predetermined first pressure and restarting said adsorption unit when said pressure in said storage vessel (34) falls to a predetermined second pressure, characterized in that said storage vessel (34) is charged with gas of substantially constant purity.

2. A method according to Claim 1, characterized in that said adsorption unit comprises a control valve (32) situated between said adsorber (22, 24) and said storage vessel (34).

EP 0 447 029 A1

3. A method according to Claim 2, characterized in that it includes the step of controlling said control valve (32) in response to the pressure in said storage vessel (34).

4. A method according to Claim 2, characterized in that it includes the step of controlling said control valve (32) in response to the purity of product.

5. A method according to any preceding Claim, characterized in that it includes the step of adjusting the cycle time of said adsorption unit.

6. A method according to Claim 5, characterized in that it includes the step of adjusting the cycle time of said adsorption unit in response to the pressure in said storage vessel (34).

7. A method according to Claim 5, characterized in that it includes the step of adjusting the cycle time of said adsorption unit in response to the purity of said product.

8. A method according to any preceding Claim, wherein said adsorption unit is a pressure swing adsorption unit and said method is characterized in that it includes the step of adjusting the depressurization time of said adsorber (22, 24).

9. A method according to Claim 8, characterized in that said depressurization time is adjusted in response to the pressure in said storage vessel (34).

10. A method according to Claim 8, characterized in that said depressurization time is adjusted in response to the purity of said product.

11. A method according to any preceding Claim, characterized in that said adsorption unit is operated at substantially maximum production for the product required.

12. An apparatus for carrying out a method according to Claim 1, which apparatus comprises a compressor (10), an adsorber (22, 24), a storage vessel (34), a pressure sensor (36) for detecting the pressure of product in said storage vessel (34) and operative to inhibit said compressor (10) when said pressure reaches a predetermined first pressure and activate said compressor (10) when said pressure falls to a predetermined second pressure, characterized in that said apparatus further comprises means to maintain the purity of gas entering said storage vessel (34) substantially constant.

13. An apparatus as claimed in Claim 12, characterized in that said means comprise a control valve (32) disposed between said adsorber (22, 24) and said storage vessel (34).

14. An apparatus as claimed in Claim 13, characterized in that said means comprises a pressure sensor (36) arranged to detect the pressure in said storage vessel (34) and means responsive to said pressure sensor (36) to control said control valve (32).

15. An apparatus as claimed in Claim 13, characterized in that said means comprises a sensor (42) for sensing the purity of said product and means responsive to said sensor (42) to control the control valve (32).

16. An apparatus as claimed in any of Claims 11 to 15, characterized in that it includes means to adjust the cycle time of said adsorber (22, 24).

17. An apparatus as claimed in Claim 15, characterized in that said means comprises a pressure sensor (36) arranged to detect the pressure in said storage vessel (34) and means responsive to said pressure sensor (36) to control the cycle time of said adsorber (22, 24).

18. An apparatus as claimed in Claim 16, characterized in that said means comprises a sensor (42) for sensing the purity of said product and means responsive to said sensor (42) to control the cycle time of said adsorber (22, 24).

19. An apparatus as claimed in any of Claims 11 to 18, characterized in that it includes means to adjust the

6

depressurization time of said adsorber (22, 24).

20. An apparatus as claimed in Claim 19, characterized in that said means comprises a pressure sensor (36) arranged to detect the pressure in said storage vessel (34) and means responsive to said pressure sensor (36) to control the depressurization time of said adsorber (22, 24).

21. An apparatus as claimed in Claim 19, characterized in that said means comprises a sensor (42) for sensing the purity of said product and means responsive to said sensor (42) to control the depressurization time of said adsorber (22, 24).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 344 917  (THE BOC GROUP plc) <br> * The whole document * | 1,2,5,6, 12-14 | B 01 D 53/04 |
| A | | 8,9,19,20 | |
| | — — — | | |
| Y | US-A-3 659 399  (KAUER, Jr. et al.) <br> * Claims 1,2,7; column 2, lines 28-75; column 3, lines 1-10,60-75; column 4, lines 1-20; figure * | 1,2,5,6, 12-14 | |
| A | | 17 | |
| | — — — | | |
| A | DE-A-3 835 164  (TOKICO LTD.) <br> * Claim 1; figure 1 * | 1,2,4,5,7, 12,15,18 | |
| | — — — — — | | |

|  |  |
|---|---|
|  | TECHNICAL FIELDS SEARCHED (Int. Cl.5) |
|  | B 01 D |

The present search report has been drawn up for all claims

| Place of search | Date of completion of search | Examiner |
|---|---|---|
| The Hague | 22 May 91 | CUBAS ALCARAZ J.L. |